# EUROPEAN PATENT SPECIFICATION

(11) **EP 1 966 438 B1**
(45) Date of publication and mention of the grant of the patent: **05.06.2013**
(21) Application number: 06837043.6
(22) Date of filing: 07.11.2006
(51) Int. Cl.: B01D 39/18, D21H 27/08, D21H 25/00

(54) **WOOD PULP PAPER WITH HIGH ANTIMICROBIAL BARRIER LEVEL**
HOLZSTOFFPAPIER MIT HOHEM ANTIMIKROBIELLEN SPERRGEHALT
PAPIER A BASE DE PATE DE BOIS PRESENTANT UN NIVEAU DE BARRIERE MICROBIENNE ELEVE

(30) Priority: 10.11.2005 US 271184
(43) Date of publication of application: 10.09.2008
(73) Proprietor: E.I. DU PONT DE NEMOURS AND COMPANY, Wilmington, DE 19898 (US)
(72) Inventor: LEVIT, Mikhail, R., Glen Allen, VA 23059 (US); BLETSOS, Ioannis, V., Midlothian, VA 23113-3889 (US); ROBERTS, David, Carl, Colonial Heights, VA 23834 (US)
(74) Representative: Matthews, Derek Peter
(86) International application number: PCT/US2006/043309
(87) International publication number: WO 2007/058822

(56) References cited:
- US-A1- 2002 168 508
- US-A1- 2003 141 261
- US-A1- 2003 177 909
- US-A1- 2005 053 644
- US-A1- 2005 142 973

## Description

### BACKGROUND OF THE INVENTION

### 1. Field of the Invention

This invention relates to wood pulp paper with high antimicrobial barrier characteristics suitable for use in sterile packaging such as medical packaging, as well as air or liquid (e.g. water) filtration and other uses.

### 2. Description of the Related Art

Barrier to microbial penetration is an important and essential property of materials used for packaging medical devices and other items which must be sterilized. Materials currently used in medical packaging include a variety of films, flash-spun polyolefin nonwovens, and medical grade papers. In cases where gas or plasma sterilization (e.g., ethylene oxide, Sterrad^{®}, etc.) is used to sterilize the contents of a package, the package generally includes a film, such as a thermoformed film, forming a bottom web that is heat-sealed to a porous and gas permeable lidding, such as paper or flash-spun polyolefin sheet. Alternately, the package may be in the form of a pouch comprising a porous layer heat-sealed to a film. The porous lidding or layer must allow the sterilant gas or plasma to enter and exit the package to sterilize its contents and at the same time provide a barrier to microbial penetration in order for the medical device or other item packaged therein to remain sterile until it is used.

The microbial barrier properties of a porous fibrous sheet depend on the average pore size, sheet thickness, size of fibers, fiber morphology, etc. Porous microbial barrier sheets prevent penetration by microbial spores and particles that range in size from sub-micrometer to a few micrometers. The ability of porous sheets to prevent bacterial penetration is measured by their Log Reduction Value (LRV). The higher the LRV value, the better a material is in preventing microbial penetration of the package. For example, the LRV of flash-spun polyolefin sheets used in medical packaging ranges between about 3.2 and 5.5 or higher, as the basis weight (BW) increases from about 1.65 to 2.2 oz/yd² (55.9 to 74.6 g/m²). Medical grade papers known in the art typically have LRVs between about 1 and 3, depending on their basis weight, pore size, additive treatments, etc. and are much less effective as microbial barriers than flash-spun materials. An LRV higher by one unit corresponds to a microbial barrier that is ten times more effective. Although natural cellulose pulp papers have been improved through many years of use in medical packaging, their barrier and mechanical properties are deficient in comparison with papers prepared from synthetic materials.

Koslow, Patent Application Publication No. U.S. 2003/0177909 describes an air filter medium comprising nanofibers. A coating of nanofibers can be used to enhance the performance of filter media. The nanofibers are preferably fibrillated nanofibers. In one embodiment a filter medium is prepared from a blend of fibrillated nanofibers and glass microfibers.

Bletsos et al., Patent Application Publication No. U.S. 2005/0142973 describes porous fibrous sheets comprising nanofibers or nanofibers and wood pulp, having excellent microbial barrier properties. Certain such sheets have a LRV of at least 5.5.

Generally, use of nanofibers and increasing their content can increase the barrier properties of nonwoven webs. It would be desirable to improve the barrier properties in a cost-effective manner, such as by using only inexpensive and naturally renewable raw materials. There remains a need for wood pulp-based papers for use in medical packaging having improved microbial barrier properties that are economical compared to primarily synthetic-based microbial barrier sheets.

### SUMMARY OF THE INVENTION

An embodiment of this invention a paper having a Log Reduction Value (LRV) of at least about 3.6, a density of at least about 0.8 g/cm³, and a basis weight of at least about 55 g/m², the paper being formed from a fibrous component of wood pulp, wherein the wood pulp is refined pulp having a Canadian Standard Freeness of less than about 360 ml and a weight-weighted mean length of less than about 3 mm.

Another embodiment of this invention is a multi-ply paper structure, where at least one ply is the paper described above.

### DETAILED DESCRIPTION OF THE INVENTION

The present invention is directed to papers formed from a fibrous component of wood pulp. The papers have improved barrier properties at substantially the same basis weight as known wood pulp papers. Certain wood pulp papers of the present invention are useful as microbial barrier materials, for example in lidding for medical packaging. Certain wood pulp papers of the present invention are also suitable for use in air or liquid filtration.

"Wood pulp" as used herein refers to the product of boiling wood chips with alkaline liquors or solutions of acidic or neutral salts followed by bleaching with chlorine compounds, the object being to remove more or less completely the hemicelluloses and lignin incrustants of the wood.

Paper grades used in medical packaging vary in fiber density, porosity, various treatments, additives, and basis weight. Medical papers are bleached and highly refined and are made by the traditional wet laid process using virgin wood pulp. Pre-formed papers used in the art generally have a basis weight of about 1.4 oz/yd² (49 g/m²) to 2.9 oz/yd² (98 g/m²). Kraft paper is a particular type of paper often used in medical packaging. It is made from kraft pulp and the method for making it involves cooking (digesting) wood chips in an alkaline solution for several hours during which time the chemicals attack the lignin in the wood. The dissolved lignin is later removed leaving behind the cellulose fibers. Unbleached kraft pulp is dark brown in color, so before it can be used in many papermaking applications it must undergo a series of bleaching processes.

Surprisingly, the inventors have found that using wood pulp having a specific combination of wood pulp freeness and pulp fiber length to prepare papers having a specified apparent density and basis weight results in much higher LRV than wood pulp papers known in the art. The wood pulp-based papers of the present invention have an LRV of at least 3.6, or at least 4, and can be at least 5.

Wood pulp used to prepare the papers of the present invention has a Canadian Standard Freeness (CSF) less than about 360 ml, preferably less than about 300 ml, and more preferably less than about 250 ml and a weight-weighted mean length of less than about 3 mm, preferably less than about 1.2 mm. The paper of the present invention has an apparent density of at least about 0.80 g/cm³. In one embodiment of this invention, the paper has density greater than about 0.80 g/cm³ and less than about 0.98 g/cm³. The papers of the present invention are prepared using methods known in the art such as wet-lay methods to prepare an as-formed paper, which is preferably subsequently calendered. The papers generally have a Gurley Air Resistance (Gurley) no greater than about 250 seconds, even no greater than about 50 seconds.

The wood pulp used to prepare the paper of the present invention can be unbleached or bleached, hardwood or a combination of hardwood and softwood. In a preferred embodiment of the present invention, the wood pulp is bleached.

The as-formed paper of the present invention can be prepared using methods known in the art, such as by forming on a Fourdrinier, inclined wire or cylinder-type papermaking machine. The as-formed, dried paper of the present invention preferably has a basis weight of at least about 55 g/m², preferably between about 60 g/m² and 120 g/m², more preferably between about 80 g/m² and 100 g/m².

In one embodiment, the paper of the present invention can comprise one or more plies having the same or different wood pulp characteristics in the various plies. For example, one of the plies can be formed from hardwood pulp and another of the plies can be formed from softwood pulp. Alternately, the pulp in one ply can have a different CSF and/or weight-weighted mean length than the pulp used in the other ply. The fibrous or pulp component of the papers of the present invention can consist entirely of wood pulp or consist essentially of wood pulp. The term "consisting essentially of as used herein is meant to allow for addition of small amounts, less than about 10 weight percent, of additional components. These additional components can include secondary fibers, such as organic or inorganic staple fibers having a denier of at least 0.7 which may be blended with the wood pulp. Examples of suitable fibers that can be blended with the wood pulp include viscose, polyester, polyamide, carbon and others. Other additional components including but not limited to powders, flakes, and pigments can be added in the paper composition, typically at levels between about 1 and 10 weight percent, using methods known in the art.

In order to achieve the desired density, a paper of the present invention can be calendered using methods known in the art after it is formed. Calendering can be conducted in-line immediately following the paper-forming step or as a separate step, at ambient or elevated temperature, with or without the use of steam or other plasticization agent. Hard nip (metal-metal) or soft nip (metal-filled roll or metal-coated roll) calenders with one or several nips can be used in the calendering process. The calendering conditions (nip pressure, line speed, temperature, etc.) are selected to achieve the desired paper density and LRV using methods known in the art. Generally, the papers are smooth-calendered, however textured or other rolls may be used in the calendering process.

Multi-ply papers can be prepared wherein the high LRV paper of the present invention is combined with other layers. For example, in a 3-ply paper, an inner ply of the high LRV paper of the present invention is sandwiched between outer plies of conventional papers. For example, the outer plies can comprise wood pulp papers prepared from longer fiber pulp, such as fibers having weight-weighted mean lengths of at least about 3 mm, or between about 3 mm and 6 mm. One or more of the layers comprising the longer pulp fibers may further comprise up to about 70 weight percent of synthetic fibers, such as for example polyamide such as nylon 6,6 or polyester such as poly(ethylene terephthalate) fibers. The synthetic fibers can have a denier per filament of about 0.7 and higher. The various layers in the multi-ply paper can be laid down sequentially during the paper forming process and then calendered. Alternately, pre-formed individual paper plies can be assembled to form a layered structure, which can be calendered subsequently. In the latter embodiment, the individual paper plies can be calendered prior to forming the layered structure and then calendered after assembly of the multi-layer structure. The use of longer fiber plies in a multi-ply structure can improve the mechanical properties of the paper such as tear strength, etc.

The papers described above are especially suited for use in medical packaging. For example, a lidding component comprising the paper of the present invention can be heat-sealed to a second component of thermoformed film after medical equipment or some other object to be sterilized is placed in the cavity formed by the thermoformed film. A heat seal layer can be extruded or coated on the entire heat seal surface of the lidding, or only onto the areas that need to be sealed to the thermoformed film (known in the art as zone coating) or can be extruded or coated onto the thermoformed film.

### TEST METHODS

In the non-limiting examples that follow, the following test methods were employed to determine various reported characteristics and properties. ASTM refers to the American Society of Testing Materials. TAPPI refers to Technical Association of Pulp and Paper Industry.

Thickness and Basis Weight of papers were determined in accordance with ASTM D 645 and ASTM D 646, respectively. Thickness measurements were used in the calculation of the apparent density of the papers.

Apparent Density of papers was determined in accordance with ASTM D 202.

Gurley Air Resistance (Gurley) for papers was determined by measuring air resistance in seconds per 100 milliliters of cylinder displacement for approximately 6.4 square centimeters circular area of a paper using a pressure differential of 1.22 kPa in accordance with TAPPI T 460.

Barrier Log Reduction Value (LRV) for papers is a measure of the bacterial barrier properties of a sheet and was determined in accordance with ASTM F 1608. In the test, the top side of a sheet is exposed to a fine aerosol mist containing Bacillus subtilis var. niger spores. Pressure on the bottom side of the web is lowered to achieve an airflow of 2.8 Ipm through the sheet. The number of spores reaching both sides of the sheet over 15 minutes is counted. LRV = Log (spore count on the top side) - Log (spore count on the bottom side). Spore count on the top side varies from test to test, but must be at least 1 million.

Canadian Standard Freeness (CSF) of the pulp is a measure of the rate at which a dilute suspension of pulp may be drained and was determined in accordance with TAPPI Test Method T 227.

Fiber length (arithmetic mean length, weight-weighted mean length, and length-weighted mean length) was measured in accordance with TAPPI Test Method T 271 using the Fiber Quality Analyzer manufactured by OpTest Equipment Inc.

### EXAMPLES

### COMPARATIVE EXAMPLE A and EXAMPLE 1

These examples demonstrate the impact of calendering on paper LRV.

For Comparative Example A and Example 1, 5.0 g (based on dry weight) of hardwood pulp with CSF of 351 ml, arithmetic mean length 0.36 mm, length-weighted mean length 0.83 mm and weight-weighted mean length 1.25 mm, were placed in a laboratory mixer (British Pulp Evaluation Apparatus, available from Mavis Engineering Ltd., London, England) with about 1600 g of water and agitated for 3 min.

The dispersion was poured, with 8 liters of water, into an approximately 21 cm x 21 cm handsheet mold to form a wet-laid sheet.

The wet sheet was placed between two pieces of blotting paper, hand couched with a rolling pin and dried in a handsheet dryer at 150°C.

The hardwood pulp used was Hawesville Hardwood, a fully bleached kraft pulp composed of southern mixed hardwoods supplied by Weyerhaeuser.

The as-formed paper was Comparative Example A. The paper of Example 1 was made by additionally passing as-formed paper through the nip of a metal-metal calender with a roll diameter of about 20 cm at a temperature of about 23°C, and linear pressure of about 2600 N/cm, (hereafter referred to as "hard calendering" or "hard").

Paper properties are shown in Table 1 below. Comparative Example A shows that the apparent density of the as-formed paper was too low to achieve the desired LRV, whereas hard calendering of the paper of Example 1 increased the apparent density to achieve the desired increase in LRV.

### COMPARATIVE EXAMPLES B - C and Example 2

These papers were formed as described above for Comparative Example A and Example 1, except that hardwood pulp with CSF of 246 ml, arithmetic mean length 0.36 mm, length-weighted mean length 0.80 mm, and weight-weighted mean length 1.08 mm was used.

Comparative Example B is the as-formed paper. Example 2 was made from the as-formed paper by hard calendering.

Comparative Example C was made from a sample of the as-formed paper by passing through one nip of a BF Perkins soft nip calender with a metal roll diameter of about 28 cm and a rubber-coated soft roll diameter of about 23 cm at temperature of about 23°C, and linear pressure of about 2000 N/cm (hereafter referred to as "soft calendering" or "soft").

Properties of the papers are shown in Table 1 below. Although, the papers of Comparative Examples B - C had a CSF within the range of the present invention, the densities of the papers were low and therefore the desired level of LRV was not achieved. This was true even for Comparative Example C, which was soft calendered.

### COMPARATIVE EXAMPLES D - E

Paper samples for Comparative Examples D - E were prepared as described above for Comparative Example A and Example 1 correspondingly, except that softwood pulp of 360 ml CSF with arithmetic mean length 1.02 mm, length-weighted mean length 2.85 mm, and weight-weighted mean length 3.74 mm was used. Comparative Example D was as-formed and Comparative Example E was hard-calendered.

The softwood pulp was Port Wentworth Softwood, which is southern bleached softwood kraft pulp supplied by Weyerhaeuser.

Properties of the papers are shown in Table 1 below. These examples demonstrate preparation of wood pulp papers having a CSF within the scope of the invention but using softwood pulp (instead of hardwood) and weight-weighted mean length outside the scope of the present invention. Further, even though Comparative Example E was "hard", the desired LRV was not achieved.

### COMPARATIVE EXAMPLES F - G

These examples demonstrate preparation of wood pulp papers using softwood pulp having a weight-weighted mean length outside the scope of the present invention.

Paper samples for Comparative Examples F - G were prepared as described above for Comparative Examples D - E, respectively, using the same softwood pulp but refined to 210 ml CSF with arithmetic mean length 0.84 mm, length-weighted mean length 2.74 mm, and weight-weighted mean length 3.74 mm.

Properties of the papers are shown in Table 1 below.

### EXAMPLE 3

This example demonstrates preparation of a hard-nip calendered paper according to the present invention from hardwood pulp.

The paper sample of Example 3 was prepared as described for Example 1, but using Southern Bleached Hardwood Kraft pulp (supplied by International Paper Company) refined to 104 ml CSF with arithmetic mean length 0.45 mm, length-weighted mean length 0.66 mm and weight-weighted mean length 0.80 mm.

Properties of the paper are shown in Table 1 below.

### COMPARATIVE EXAMPLE H

This example demonstrates preparation of wood pulp papers using a blend of 50/50 by weight hardwood and soft wood pulps.

The example was made from 2.5 g (based on dry weight) of hardwood pulp from Comparative Examples B - C with 2.5 grams of softwood pulp from Comparative Examples F-G which were placed together in the laboratory mixer and made as described in Comparative Example A and Example 1. The example was then hard calendered.

Properties of the paper are shown in Table 1 below.

### EXAMPLE 4

This example demonstrates preparation of two-ply wood pulp papers using a combination of hardwood pulp in one ply and softwood pulp in the second ply, wherein the ratio of hardwood to softwood pulp was 50/50 based on weight.

The hardwood ply was made from 2.5 g (based on dry weight) of hardwood pulp as used in Example 2 and the softwood ply was made from 2.5 g of the softwood pulp from examples F-G, using the process as described for the foregoing examples.

Both wet-laid sheets were placed together between two pieces of blotting paper, hand couched with a rolling pin and dried in a handsheet dryer at 150°C. The 2-ply paper structure was then hard calendered.

Properties of the paper are shown in Table 1 below.

### EXAMPLE 5

This example demonstrates preparation of 2-ply wood pulp papers using a two-ply combination of hardwood pulp in one ply and softwood pulp in the second ply was made the same way as in Example 4, except the hardwood ply was made from 3.75 g (based on dry weight) of hardwood pulp and softwood ply was made from 2.5 g of the softwood pulp, such that the ratio of hardwood to softwood pulp was 75/25 based on weight.

Properties of the papers are shown in Table 1 below.

### COMPARATIVE EXAMPLES J AND K

Comparative Examples J and K are commercially available wood pulp based medical papers. Comparative Example J is 45# Impervon® medical paper and Comparative Example K is 60# Impervon® medical paper, both available from Kimberly-Clark Corporation (Neenah, WI).

Properties of the papers are shown in Table 1 below.

**Table 1. Properties of Wood Pulp Papers**

| Example | Description | LRV | BW, g/m2 | Apparent density, g/cm³ | Gurley, sec |
|---|---|---|---|---|---|
| Comp. A | Hardwood; as-formed | 1.2 | 102 | 0.34 | 2.3 |
| 1 | Hardwood; hard | 3.7 | 107 | 0.91 | 20 |
| Comp. B | Hardwood; as-formed | 2.4 | 99 | 0.38 | 4 |
| 2 | Hardwood; hard | 5.3 | 98 | 0.92 | 28 |
| Comp. C | Hardwood; soft | 2.7 | 110 | 0.535 | 4.2 |
| Comp. D | Softwood; as-formed | 1.4 | 106 | 0.41 | 2.3 |
| Comp. E | Softwood; hard | 2 | 110 | 0.91 | 18 |
| Comp. F | Softwood; as-formed | 1.0 | 106 | 0.4 | 9.9 |
| Comp. G | Softwood; hard | 2.1 | 108 | 0.89 | 52 |
| 3 | Hardwood; hard | 5.2 | 93 | 0.98 | 202 |
| Comp. H | Blended 50/50 softwood/hardwood; hard | 2.3 | 112 | 0.91 | 31 |
| 4 | 2-ply 50/50 softwood/hardwood; hard | 3.6 | 115 | 0.87 | 5.8 |
| 5 | 2-ply 25/75 softwood/hardwood; hard | 5.2 | 108 | 0.83 | 8.6 |
| Comp. J | Medical paper 45# | 1.7 | 79 | 0.92 | 86 |
| Comp. K | Medical paper 60# | 3.4 | 99 | 0.80 | 17 |

As can be seen from the data, only a combination of well-refined pulp with short fibers that have been densified to high apparent density (Examples 1-4) can provide LRV significantly above the known wood pulp based papers.

Densification to about 0.98 g/cm³ (Example 3) gave relatively high air resistance (Gurley). In several embodiments, the apparent density is less than 0.98 g/cm³, but above 0.80 g/cm³.

Blends of hardwood pulp with short fibers and softwood pulp with long fibers (Comparative Example H) did not provide barrier properties within the desired range of the present invention. However, distributing each type of the pulp in a separate ply or layer can give high LRV, which is superior to the prior art samples, if the basis weight of the ply with the short fibers is at least 55 g/m2 (Example 4).

## Claims

1. A paper having a Log Reduction Value of at least 3.6 as determined by ASTM F 1608, a density of at least 0.80 g/cm³, and a basis weight of at least 55 g/m², the paper being formed from a fibrous component consisting essentially of wood pulp and less than 10 weight percent of additional components, wherein the wood pulp is refined pulp having a Canadian Standard Freeness of less than 360 ml and a weight-weighted mean length of less than 3 mm.

2. The paper of claim 1 having a Log Reduction Value of at least 4.

3. The paper of claim 1 having a Log Reduction Value of at least 5.

4. The paper of claim 1, wherein the wood pulp has a Canadian Standard Freeness less than 300 ml.

5. The paper of claim 4, wherein the wood pulp has a Canadian Standard Freeness of less than 250 ml.

6. The paper of claim 1, wherein the basis weight of the paper is between 80 g/m² and 100 g/m².

7. The paper of claim 1, wherein the density of the paper is greater than 0.80 g/cm³ and less than 0.98 g/cm³.

8. The paper of claim 1, wherein the wood pulp has a weight-weighted mean length of less than 1.2 mm.

9. The paper of claim 1, wherein the wood pulp is bleached hardwood pulp.

10. The paper of claim 1, wherein the paper is calendered.

11. The paper of claim 1, wherein the paper has a Gurley of no greater than 250 seconds.

12. The paper of claim 11, wherein the paper has a Gurley of no greater than 50 seconds.

13. The paper of claim 1, wherein the paper is coated on an entire surface thereof or in selected areas with a heat-seal composition,

14. A multi-ply paper structure, wherein at least one ply is the paper of claim 1.

15. The multi-ply paper according to claim 14, wherein the multi-ply paper is coated on an entire surface thereof or in selected areas with a heat-seal composition.

16. The multi-ply paper of claim 14, wherein the multi-ply paper is calendered.

17. The multi-ply paper according to claim 14, wherein the multi-ply paper has a Gurley of no greater than 250 seconds.

18. A multi-ply paper, comprising a first ply comprising the wood pulp paper according to claim 1 sandwiched between second and third plies of paper comprising wood pulp, wherein the wood pulp in the second and third plies comprise fibers having a weight-weighted mean length of at least 3 mm and wherein the multi-ply paper has been calendered.

19. The multi-ply paper of claim 18, wherein the second and third plies further comprise up to 70 weight percent of synthetic fibers.

20. A medical package comprising a lidding component heat-sealed to a second component, wherein the lidding component comprises the wood pulp paper of claim 1 or 14.

21. An air filter, comprising the paper of claim 1.

22. A liquid filter, comprising the paper of claim 1.

## Patentansprüche

1. Papier mit einem Log-Reduktion-Wert von zumindest 3,6, wie mittels ASTM F 1608 bestimmt, mit einer Dichte von zumindest 0,80 g/cm³ und einem Basisgewicht von zumindest 55 g/m², wobei das Papier aus einer faserigen Komponente gebildet ist, die im Wesentlichen aus Holzfaserstoff und weniger als 10 Gewichtsprozent an zusätzlichen Komponenten besteht, wobei der Holzfaserstoff verfeinerter Faserbrei mit einer Canadian Standard Freeness von weniger als 360 ml und einer gewichtsgewichteten mittleren Länge von weniger als 3 mm ist.

2. Papier nach Anspruch 1 mit einem Log-Reduktion-Wert von zumindest 4.

3. Papier nach Anspruch 1 mit einem Log-Reduktion-Wert von zumindest 5.

4. Papier nach Anspruch 1, wobei der Holzfaserstoff eine Canadian Standard Freeness von weniger als 300 ml aufweist.

5. Papier nach Anspruch 4, wobei der Holzfaserstoff eine Canadian Standard Freeness von weniger als 250 ml aufweist.

6. Papier nach Anspruch 1, wobei das Basisgewicht des Papiers zwischen 80 g/m² und 100 g/m² beträgt.

7. Papier nach Anspruch 1, wobei die Dichte des Papiers größer als 0,80 g/cm³ und geringer als 0,98 g/cm³ ist.

8. Papier nach Anspruch 1, wobei der Holzfaserstoff eine gewichtsgewichtete mittlere Länge von weniger als 1,2 mm aufweist.

9. Papier nach Anspruch 1, wobei der Holzfaserstoff gebleichter Hartholzfaserstoff ist.

10. Papier nach Anspruch 1, wobei das Papier kalandriert ist.

11. Papier nach Anspruch 1, wobei das Papier eine Gurley von nicht mehr als 250 Sekunden aufweist.

12. Papier nach Anspruch 11, wobei das Papier eine Gurley von nicht mehr als 50 Sekunden aufweist.

13. Papier nach Anspruch 1, wobei das Papier auf einer gesamten Oberfläche davon oder in ausgewählten Bereichen mit einer Heißversiegelungszusammensetzung beschichtet ist.

14. Mehrlagige Papierstruktur, wobei zumindest eine Lage das Papier nach Anspruch 1 ist.

15. Mehrlagiges Papier nach Anspruch 14, wobei das mehrlagige Papier auf einer gesamten Oberfläche davon oder in ausgewählten Bereichen mit einer Heißversiegelungszusammensetzung beschichtet ist.

16. Mehrlagiges Papier nach Anspruch 14, wobei das mehrlagige Papier kalandriert ist.

17. Mehrlagiges Papier nach Anspruch 14, wobei das mehrlagige Papier eine Gurley von nicht mehr als 250 Sekunden aufweist.

18. Mehrlagiges Papier, umfassend eine erste Lage, die das Holzfaserstoffpapier nach Anspruch 1 zwischen zweiten und dritten Lagen aus Papier umfasst, das Holzfaserstoff umfasst, wobei der Holzfaserstoff in den zweiten und dritten Lagen Fasern mit einer gewichtsgewichteten mittleren Länge von zumindest 3 mm umfasst, und wobei das mehrlagige Papier kalandriert ist.

19. Mehrlagiges Papier nach Anspruch 18, wobei die zweiten und dritten Lagen ferner bis zu 70 Gewichtsprozent synthetische Fasern umfassen.

20. Medizinisches Paket, umfassend eine Abdeckkomponente, die mit einer zweiten Komponente heißversiegelt ist, wobei die Abdeckkomponente das Holzfaserstoffpapier nach Anspruch 1 oder 14 unfasst.

21. Luftfilter, umfassend das Papier nach Anspruch 1.

22. Flüssigkeitsfilter, umfassend das Papier nach Anspruch 1.

## Revendications

1. Papier ayant une valeur de réduction logarithmique d'au moins 3,6 telle que déterminée par ASTM F 1608, une masse volumique d'au moins 0,80 g/cm³, et un grammage d'au moins 55 g/m², le papier étant formé d'un composant fibreux essentiellement constitué de pâte à papier et moins de 10 pour cent en poids de composants additionnels, la pâte à papier étant de la pâte raffinée ayant un indice d'égouttage canadien standard inférieur à 360 ml et une longueur moyenne pondérée du poids inférieure à 3 mm.

2. Papier de la revendication 1 ayant une valeur de réduction logarithmique d'au moins 4.

3. Papier de la revendication 1 ayant une valeur de réduction logarithmique d'au moins 5.

4. Papier de la revendication 1, la pâte à papier ayant un indice d'égouttage canadien standard inférieur à 300 ml.

5. Papier de la revendication 4, la pâte à papier ayant un indice d'égouttage canadien standard inférieur à 250 ml.

6. Papier de la revendication 1, le grammage du papier étant compris entre 80 g/m² et 100 g/m².

7. Papier de la revendication 1, la masse volumique du papier étant supérieure à 0,80 g/cm³ et inférieure à 0,98 g/cm³.

8. Papier de la revendication 1, la pâte à papier ayant une longueur moyenne pondérée du poids inférieur à environ 1,2 mm.

9. Papier de la revendication 1, la pâte à papier étant de la pâte de feuillus blanchie.

10. Papier de la revendication 1, le papier étant calandré.

11. Papier de la revendication 1, le papier ayant une rigidité Gurley de pas plus de 250 secondes.

12. Papier de la revendication 11, le papier ayant une rigidité Gurley de pas plus de 50 secondes.

13. Papier de la revendication 1, le papier étant couché sur une surface totale de celle-ci ou dans des zones sélectionnées avec une composition de thermoscellage.

14. Structure de papier multi-couches, au moins une couche étant le papier de la revendication 1.

15. Papier multi-couches selon la revendication 14, le papier multi-couches étant couché sur une surface totale de celui-ci ou dans des zones sélectionnées avec une composition de thermoscellage.

16. Papier multi-couches de la revendication 14, le papier multi-couches étant calandré.

17. Papier multi-couches selon la revendication 14, le papier multi-couches ayant une rigidité Gurley de pas plus de 250 secondes.

18. Papier multi-couches, comprenant une première couche comprenant la pâte à papier selon la revendication 1 intercalée entre les deuxième et troisième couches de papier comprenant de la pâte à papier, la pâte à papier dans les deuxième et troisième couches comprenant des fibres ayant une longueur moyenne pondérée du poids d'au moins 3 mm et le papier multi-couches ayant été calandré.

19. Papier multi-couches de la revendication 18, dans lequel les deuxième et troisième couches comprennent en outre jusqu'à 70 pour cent en poids de fibres synthétiques.

20. Emballage médical comprenant un composant d'operculage thermoscellé avec un deuxième composant, le composant d'operculage comprenant la pâte à papier de la revendication 1 ou 14.

21. Filtre à air, comprenant le papier de la revendication 1.

22. Filtre à liquide, comprenant le papier de la revendication 1.
